**Europäisches Patentamt**

**European Patent Office**

**Office européen des brevets**

(11) Numéro de publication: **0 113 271**
**B1**

(12) **FASCICULE DE BREVET EUROPEEN**

(45) Date de publication du fascicule du brevet: **03.06.87**

(51) Int. Cl.⁴: **F 16 D 3/84**

(21) Numéro de dépôt: **83402400.2**

(22) Date de dépôt: **13.12.83**

(54) **Soufflet de protection, notamment pour transmission avant de véhicule automobile.**

(30) Priorité: **16.12.82 FR 8221118**

(43) Date de publication de la demande:
**11.07.84 Bulletin 84/28**

(45) Mention de la délivrance du brevet:
**03.06.87 Bulletin 87/23**

(84) Etats contractants désignés:
**AT BE CH DE GB IT LI NL SE**

(56) Documents cités:
**FR-A-2 257 042**
**FR-A-2 414 144**
**GB-A-1 218 729**

(73) Titulaire: **COMPAGNIE DES PRODUITS INDUSTRIELS DE L'OUEST (C.P.I.O.)**
**Boîte Postale 1226 Zone Industrielle de Nantes Carquefou**
**F-44023 Nantes Cedex (FR)**

(72) Inventeur: **Billet, Maurice**
**17, Avenue des Peupliers**
**F-44470 Thouare (FR)**
Inventeur: **Lallement, Serge**
**2, Les Hauts de l'Erdre**
**F-44240 La Chapelle Sur Erdre (FR)**

(74) Mandataire: **Réal, Jacques**
**Régie Nationale des Usines Renault SCE 0804**
**F-92109 Boulogne Billancourt Cedex (FR)**

Courier Press, Leamington Spa, England.

## Description

La présente invention se rapporte à un nouveau soufflet de protection à volume réduit pour joints articulés, notamment pour transmission de roues avant de véhicule automobile; elle concerne plus particulièrement un élément protecteur en caoutchouc pour joints de cardan à tripodes ou à billes, dont le volume est le plus réduit possible, tout en autorisant de grands débattements avec le minimum d'usure de l'élément protecteur.

Au contraire de ce qui précède, on utilise généralement des soufflets de cardans volumineux du côté de la roue, ce qui implique la présence d'une masse importante de graisse à l'intérieur de ce type de soufflets.

Une autre pratique actuelle réside dans l'utilisation de soufflets de volume réduit, comportant plusieurs plis de diamètre différent dont les parois forment des angles aigus au repos. Un tel dispositif peut être illustré par le brevet français FR—A—2 257 042. L'inconvénient de cette disposition réside dans le fait que les sommets des plis viennent en contact lors du braquage des roues; comme ces différentes zônes constitutives de ce type de soufflet sont en rotation relative les unes par rapport aux autres, il en résulte une usure de ses parois extérieures, donc une fragilisation, voire même une crevaison prématurée, avec perte de la graisse contenue et risque d'introduction de corps étrangers dans les cardans.

Il peut aussi se produire une abrasion intérieure provenant du contact des sommets des plis inférieurs sur les arêtes vives du tripode, notamment dans les angles importants de braquage. Il apparaît ainsi qu'à chaque rotation du soufflet, les plis sont soumis à un angle très fermé en compression et très ouvert dans la partie tendue.

Ceci contribue à imposer aux plis à chaque tour, une grande amplitude d'angle qui va de l'angle complètement fermé dans la zône en compression à l'angle presque plat dans la zône en extension.

Il est donc souhaitable, pour la longévité du soufflet, de réduire ces débattements importants et de ce fait limiter les contraintes dans les hauts et creux des plis.

La présente invention a pour but de pallier les inconvénients ce-dessus en définissant la forme particulière d'un soufflet de volume réduit et constant tout en évitant le phénomène d'abrasion des plis évoqués ce-dessus au cours des braquages de valeur angulaire élevée.

L'invention sera décrite au regard des figures 1 à 16 ci-jointes données à titre d'exemples non limitatifs et qui décrivent respectivement

— figure 1 une vue en coupe d'un soufflet classique à plis triangulaires pour un grand angle de braquage.

— figures 2 et 3 une vue en coupe, au repos respectivement de plis de section triangulaire et section droite.

— figure 4 une vue en coupe d'un soufflet selon l'invention dont les plis sont à angle droit, à l'état de repos.

— figure 5 à 8: des vues en coupe du soufflet selon l'invention, respectivement pour des angles de braquage de valeurs 10°—20°—30° et 40°.

— figures 9—10 et 11: des vues en coupe d'autres variantes de la bande par rapport au grand pli et à la zône d'accrochage.

— figure 12: une vue en coupe d'une variante comportant un bourrelet anti-choc dans la zône d'accrochage.

— figures 13 et 14: des vues en coupe représentant respectivement le soufflet sur une transmission à arbre plein et sur transmission à version tube.

— figures 15 et 16: des vues en coupe montrant des variantes soulignant la possibilité d'homotétie du soufflet.

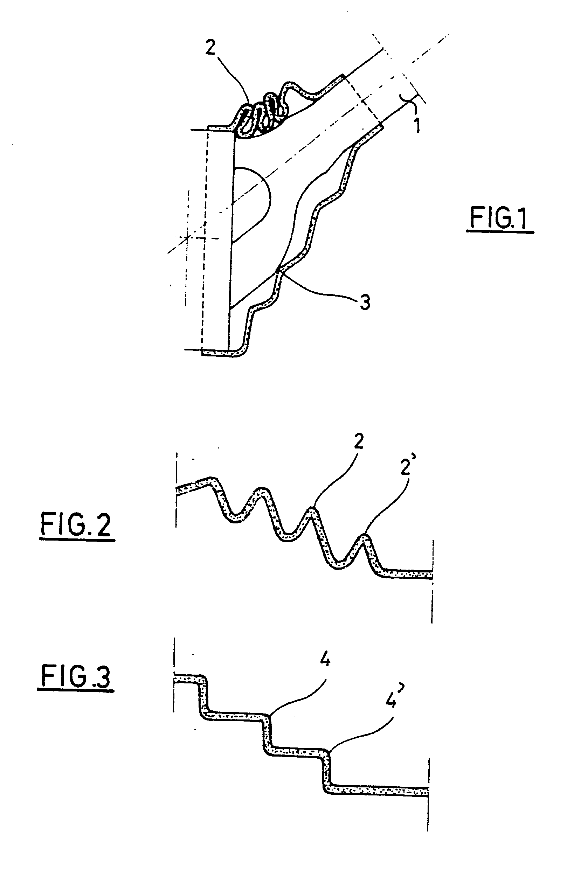

La figure 1 montre l'état d'un soufflet généralement employé, lorsque l'organe de transmission 1 est braqué d'environ 40°. Les plis étant de structure classique, c'est-à-dire constitués par des parois formant un angle aigu entre elles, au repos, comme représentés à la figure 2, on constacte que d'un côté les sommets des plis entrant en contact entre eux sont soumis à une pression importante. Du côté opposé, les sommets 3 internes de la partie tendue du soufflet, proche de la zône tripode de la transmission, peuvent également subir une forte abrasion lorsqu'ils rencontrent cette zône très agressive.

La disposition des sommets des plis entre eux et particuliérement leur éloignement est donc un facteur déterminant de la longévité du soufflet. La comparaison des formes des parois selon les figures 2 et 3 montre que l'éloignement des sommets 2—2' d'une structure de section angulaire aigue selon la figure 2 est plus faible que celui des sommets 4—4' de la figure 3 d'une structure de section à angles droits.

Partant de cette constatation et gardant encore le désir de donner au soufflet de l'invention le plus faible volume interne possible, on prendra en considération les critères suivants:

— utilisation d'au moins deux plis dont les parois forment des angles proches de 90°.

— éloignement maximum des sommets des plis.

— réduction maximale du nombre des plis et longueur minimale du soufflet.

— adjonction d'une zône cylindrique en prolongement de la fixation du soufflet, du côté opposé de la transmission relié à la roue.

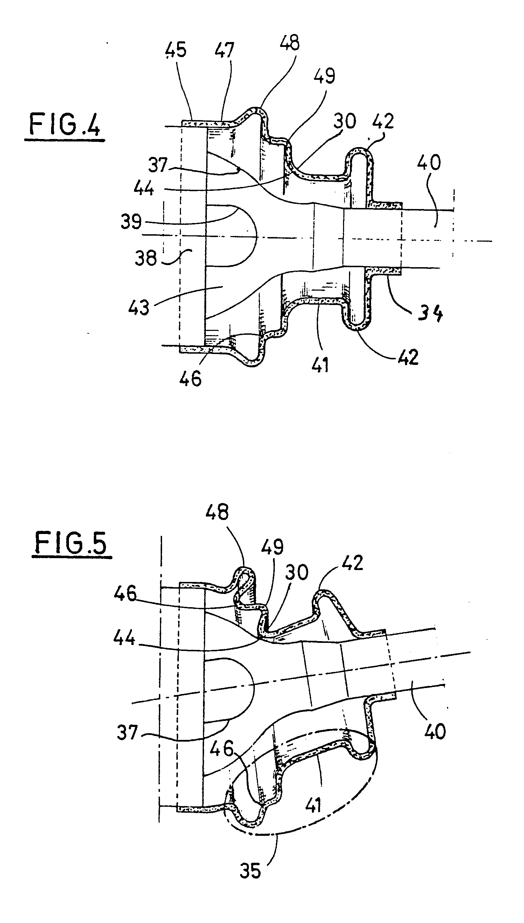

Le soufflet selon l'invention conforme à ce qui précise est illustré, au repos, à la figure 4.

L'élément de transmission à revêtir comporte un arbre 40 relié par l'une de ses extrémités à la roue motrice avant droite, non figurée, et par son extrémité opposée tripode 43, à un élément de plus grand diamètre 38 disposé en amont par rapport au moteur.

Le soufflet protecteur comporte une zône cylindrique située du côté du grand diamètre 38 de la transmission, d'un grand pli 48 de diamètre légèrement supérieur, d'un pli intermédiaire 49 relié à une autre partie cylindrique 41 selon un rayon de courbure 30, et d'un petit pli 42 se terminant par un manchon 34 de diamètre réduit entourant l'arbre 40.

Le petit pli 42 a pour mission d'assurer le complément nécessaire des autres plis en extension dans les grands débattements.

La partie cylindrique 41 situe la distance nécessaire entre ce petit pli 42 et les deux autres 48 et 49 pour éviter le contact et donc l'érosion des plis, en position de braquage maximum de la transmission 40.

Le rayon de courbure 30 déterminant le passage du pli 49 à la zône cylindrique 41, joue un rôle important de charnière; il est la liaison entre le petit pli 42 ainsi que ladite zône cylindrique 41 et les deux autres plis 48 et 49 prolongés par la bande 47. Ce point charnière 30 est situé sensiblement au mileu de la longueur totale du soufflet. Sa position est limitée vers l'intérieur par la proximité du tripode 43 dont les arêtes 37 sont agressives. Pour les grands angles de braquage le point 44 du soufflet ne touche pas le tripode 43 mais en est très proche, il est donc dans une position limite maximum. Le pli intermédiaire 49 et le grand pli 48, bien que très proches l'un de l'autre, ont les sommets suffisamment éloignés, pour que, même dans les grands angles de braquage, ils ne se touchent jamais l'un l'autre.

Entre ces deux plis 48 et 49 et la zône d'accrochage 45, une bande intermédiaire 47 joue deux rôles prépondérants. Le premier est d'éloigner l'angle 46 du tripode 43 car ce point, pour les grands angles de braquage, tend à rentrer vers l'intérieur du soufflet. Grâce à cet éloignement le point 46 rentre vers l'intérieur sans toucher les zônes agressives en 37; sa deuxième fonction est d'assurer le basculement des plis vers l'extérieur pour les angles maximum de braquage, plutôt que d'obtenir un bourrage des plis à l'intérieur du soufflet.

En général, on donne au soufflet une épaisseur constante sur toute sa longueur, mais on peut cependant être amené à renforcer certaines parties plus exposées que d'autres à l'usure.

A titre d'exemple, on peut mentionner les caractéristiques dimensionnelles ci-dessous, qui ont permis d'obtenir des soufflets selon l'invention particulièrement performants.

On donne ainsi aux plis un rayon de courbure compris entre 0,5 fois et 5 fois l'épaisseur du soufflet, un diamètre respectivement de l'ordre de 0,9 à 1,1 fois la longueur totale du soufflet pour le grand pli 48, de 0,7 fois à 1 fois cette longueur pour le pli intermédiaire 49, de 0,6 fois à 0,8 fois cette longueur pour le petit pli, de 0,4 à 0,6 fois cette longueur pour la première zône cylindrique 41 et pour la seconde zône cylindrique 47, une valeur légèrement supérieure au diamètre du pli intermédiaire 49.

En ce qui concerne la distance séparant le rebord de la seconde zône cylindrique 47 des plans de symétrie de chacun des plis du soufflet de l'invention, on a retenu de préférence des longueurs approximatives de 0,1 à 0,3 fois celle du soufflet pour le grand pli 48, de 0,4 à 0,5 fois pour le pli intermédiaire 49, de 0,7 à 0,8 fois pour le petit pli 42.

Notons encore qu'il est souhaitable de donner à la seconde zône cylindrique 47 une longueur voisine de deux à cinq fois l'épaisseur moyenne du soufflet.

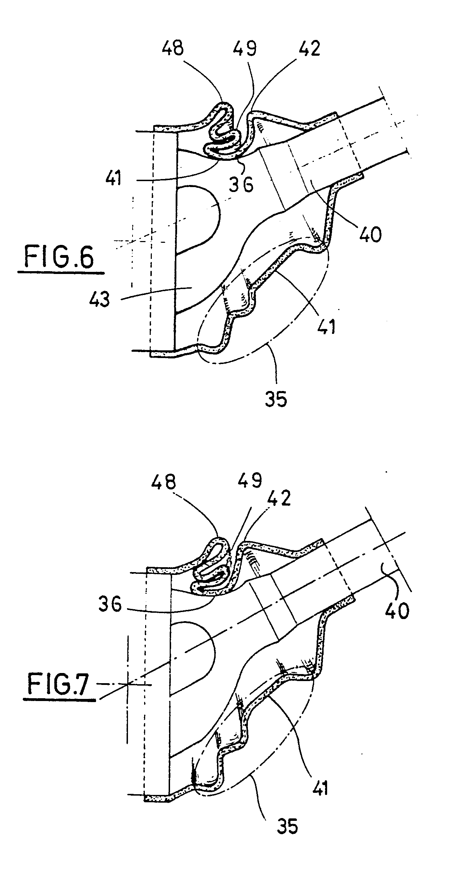

La figure 5 représente le soufflet pour un angle de 10° de braquage du bras de transmission 40. Sous cet angle il tourne généralement à haute vitesse, on remarque la bonne raideur coaxiale de la partie cylindrique 41 par rapport à l'arbre 40. Le point charnière constitué par le rayon de courbure 30, et l'ensemble des plis intérieurs 44 et 46 ne touchent aucunement les parties métalliques de la transmission.

Pour un angle d'inclinaison du bras de transmission 40 d'une valeur de 20°, comme indiqué à la figure 6, la zône cylindrique 41 vient en contact sur la partie lisse de l'arbre 36, le pli intermédiaire 49 se loge entre les deux plis 48 et 42. Aucun des trois plis 48, 49 et 42 ne touche l'autre. La partie tendue opposée 35 du soufflet reste suffisamment éloignée du tripode 43.

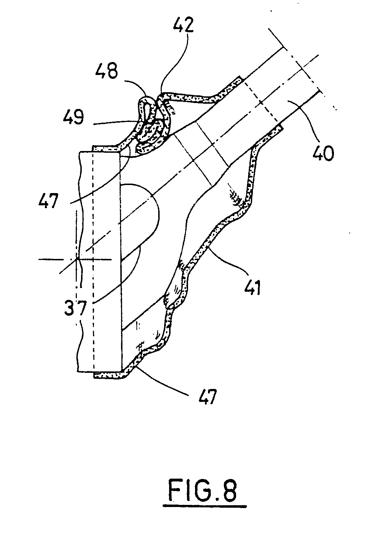

Pour une inclinaison de 30°, (figure 7) les plis 48, 49 et 42 s'imbriquent les uns dans les autres sans se toucher. Le pli intermédiaire 49 se couche sur la zône cylindrique 41, elle-même en appui sur la partie lisse de l'arbre 36. Les deux autres plis 48 et 42, très proches l'un de l'autre, recouvrent l'ensemble constitué par le pli 49 et la partie cylindrique 41. La partie tendue 35 reste encore suffisamment éloignée du tripode.

Pour une inclinaison de 40°, (figure 8) le petit pli 42 vient en contact sur le grand pli 48. A cet angle de braquage il faut noter que les vitesses de rotation sont nécessairement faibles.

La partie cylindrique 41, en appui sur l'arbre 40, et le pli intermédiaire 49 glissent sous le grand pli 48 et poussent celui-ci vers l'extérieur. Les trois plis 48, 49 et 42 sont ainsi dégagés de toute agressivité interne du soufflet provoquée par l'arête 37 du tripode lorsqu'il y a contact.

Ce basculement est favorisé par la zône cylindrique 47 qui agit comme charnière. La différence de diamètre entre le pli intermédiaire 49 (figure 4) et, celui plus grand, de la zône cylindrique 47 permet d'obtenir ce mouvement en évitant tout verrouillage de la face interne du pli 49 sur la face interne du pli 47. En position tendue la zône cylindrique 47 (figure 8) prend la direction de l'angle que l'arbre 40 lui impose et évite une tension trop importante des plis. Du côté de l'angle fermé de la transmission, la zône cylindrique 47 et le pli 48 sont dégagés vers l'extérieur et bien qu'il y ait contact entre les plis 42 et 48, la souplesse de cette disposition a pour effet de limiter considérablement une abrasion éventuelle.

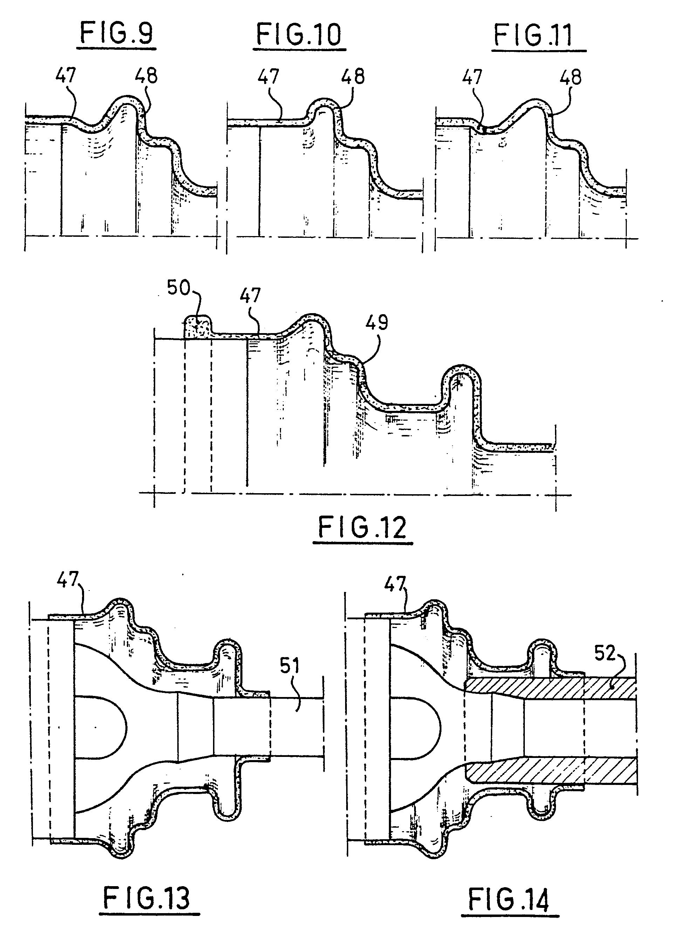

La liaison du grand pli 48 avec la zône cylindrique 47 peut s'effectuer selon les variantes illustrées par les figures 9—10—11. Une autre variante consiste à ajouter au rebord extrême de la fixation de la zône 47 de grand diamètre un bourrelet de protection 50 (figure 12) destiné à éviter toute dégradation du soufflet lors d'un choc.

Le dispositif selon l'invention peut s'adapter sur des transmissions à version arbre 51 (figure 13) ou version tube 52 (figure 14).

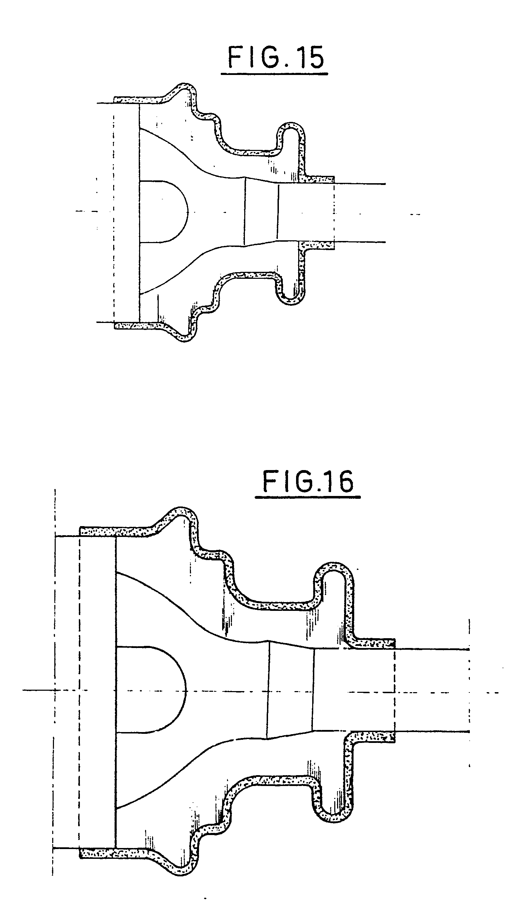

Les éventuelles modifications du soufflet correspondant à l'utilisation de l'une ou l'autre des versions ci-dessus n'impliquent pas un changement notable de sa configuration ni de son principe de fonctionnement. Il en résulte, compte-tenu de cette adaptation sur des diamètres différents, qu'une application sur des transmissions aux dimensions plus ou moins réduites est possible par simple transformation homotétique du soufflet, comme celà est visible aux figures 15 et 16.

La présente invention est également utilisable sur des joints de cardan à billes. Dans ce cas, le soufflet tout en restant fidèle à son principe de fonctionnement peut être réduit en volume, d'autant plus facilement qu'il n'existe pas d'encombrement de tripode.

**Revendications**

1. Soufflet de protection, notamment pour transmission de roues avant de véhicule automobile, du type comportant un petit pli (42) à l'une de ses extrémités, relié par un manchon de diamètre réduit à l'un des éléments (40) de la transmission, coopérant avec un pli intermédiaire (49) et un grand pli (48), ce dernier étant fixé sur le second élément de transmission (38) de plus grand diamètre au moyen d'un second manchon (47), caractérisé par le fait que le petit pli (42) est réuni au pli intermédiaire (49) par l'entremise d'une zône cylindrique (41) évitant ainsi le contact et donc l'érosion des différents plis en position de braquage maximum de la transmission (40), ladite zône (41) s'évasant vers le pli (49) selon un rayon de courbure (30).

2. Soufflet de protection selon la revendicaion 1, caractérisé en ce que les parois du pli (49) font entre elles angle droit, chacune desdites parois, respectivement réunies au pli (48) et à la première zône cylindrique (41) l'étant selon un angle sensiblement de même valeur.

3. Soufflet de protection selon la revendication 1, caractérisé en ce que le rayon de courbure des plis est compris entre 0,5 fois et 5 fois l'épaisseur du soufflet.

4. Soufflet de protection selon la revendication 1, caractérisé en ce que son épaisseur est constante sur au moins une partie de sa longueur.

5. Soufflet de protection selon la revendication 1, caractérisé en ce que le diamètre du grand pli (48) à une valeur de l'ordre de 0,9 à 1,1 fois la longueur totale du soufflet.

6. Soufflet de protection selon la revendication 1, caractérisé en ce que le diamètre du pli intermédiaire (49) à une valeur de l'ordre de 0,7 à 1 fois la longueur totale du soufflet.

7. Soufflet de protection selon la revendication 1, caractérisé en ce que le diamètre du petit pli (42) à une valeur de l'ordre de 0,6 à 0,8 fois la longueur totale du soufflet.

8. Soufflet de protection selon la revendication 1, caractérisé en ce que le diamètre de la première zône cylindrique (41) est comprise entre 0,4 et 0,6 fois la longuer totale du soufflet.

9. Soufflet de protection selon la revendication 1, caractérisé en ce que le diamètre de la seconde zône cylindrique (47) est légèrement supérieur au diamètre du pli intermédiaire (49).

10. Soufflet de protection selon la revendication 1, caractérisé en ce que la longueur de la seconde zône cylindrique (47) est de l'ordre de deux à cinq fois l'épaisseur moyenne du soufflet.

11. Soufflet de protection selon la revendication 1, caractérisé en ce que le plan de symétrie de chaque pli se situe à une distance du rebord de la seconde zône cylindrique (47) respectivement de 0,1 à 0,3 fois la longuéur totale du soufflet pour le grand pli (48), de 0,4 à 0,5 fois la même longueur pour le pli intermédiaire (49), de 0,7 à 0,8 fois la même longueur pour le petit pli (42).

**Patentansprüche**

1. Schutzbalg, insbesondere für Kraftfahrzeuge mit Vorderradantrieb, der eine erste Falte (42) an einem seiner Enden aufweist und über eine Muffe verringerten Durchmessers mit einem der Antriebsteile (40) verbunden ist, welche mit einer mittleren Falte (49) und einer froßen Falte (48) zusammenwirkt, wobei letztere am zweiten Antriebsteil (38) größeren Durchmessers mittels einer zweiten Muffe (47) befestigt ist, dadurch gekennzeichnet, daß die kleine Falte (42) mit der mittleren Falte (49) durch Zwischenschalten eines zylindrischen Abschnitts (41) verbunden ist um so eine Berührung und damit eine Korrosion der einzelnen Falten bei maximalem Einschlag des Antriebs zu vermeiden, wobei der Abschnitt (41) in Richtung der Falte (49) mit einem Krümmungsradius (30) aufgeweitet ist.

2. Schutzbalg nach Anspruch 1, dadurch gekennzeichnet, daß die Wände der Falte (49) zwischen sich einen rechten Winkel einschließen und jede dieser Wände, die mit der Falte (48) bzw. dem ersten zylindrischen Abschnitt (41) verbunden ist unter einem Winkel, der im wesentlichen den gleichen Wert aufweist, angeordnet ist.

3. Schutzbalg nach Anspruch 1, dadurch gekennzeichnet, daß der Krümmungsradius der Falten zwischen 0,5 Mal und 5 Mal der Balgdicke beträgt.

4. Schutzbalg nach Anspruch 1, dadurch gekennzeichnet, daß seine Dicke wenigstens entlang eines Teils seiner Länge konstant ist.

5. Schutzbalg nach Anspruch 1, dadurch gekennzeichnet, daß der Durchmesser der großen Falte (48) einen Wert in der größenordnung von 0,1 bis 1,1 mal der Gesamtlänge des balges aufweist.

6. Schutzbalg nach Anspruch 1, dadurch gekennzeichnet, daß der Durchmesser der mittleren Falte (49) einen Wert in der Größenordnung von 0,7 bis 1 Mal die Gesamtlänge des Balges aufweist.

7. Schutzbalg nach Anspruch 1, dadurch gekennzeichnet, daß der Durchmesser der kleinen Falte (42) einen Wert in der Größenordnung von 0,6 bis 0,8 Mal der Gesamtlänge des Balges aufweist.

8. Schultzbalg nach Anspruch 1, dadurch gekennzeichnet, daß der Durchmesser des ersten zylindrischen Abschnitts (41) zwischen 0,4 und 0,6 Mal der Gesamtlänge des Balgs beträgt.

9. Schutzbalg nach Anspruch 1, dadurch gekennzeichnet, daß der Durchmesser des zweiten zylindrischen Abschnitts (47) geringfügig größer als der Durchmesser der mittleren Falte (49) ist.

10. Schultzbalg nach Anspruch 1, dadurch gekennzeichnet, daß die Länge des zweiten zylindrischen Abschnitts (47) in der Größenordnung von 2 bis 5 Mal der mittleren Dicke des Balges beträgt.

11. Schultzbalg nach Anspruch 1, dadurch gekennzeichnet, daß die Symmetrieebene einer jeden Falte in einem Abstand vom Rand des zweiten zylindrischen Abschnitts (47) angeordnet ist, der 0,1 bis 0,3 mal der Gesamtlänge des Balges für die große Falte (48), 0,4 bis 0,5 Mal der gleichen Länge für die mittlere Falte (49) und 0,7 bis 0,8 Mal der gleichen Länge für die kleine Falte (42) entspricht.

## Claims

1. A protective bellows in particular for the front wheel transmission of a motor vehicle, of the type comprising a small fold (42) at one of its ends, which is connected by a sleeve of reduced diameter to one of the elements (40) of the transmission, co-operating with an intermediate fold (49) and a large fold (48), the latter being fixed on the second transmission element (38) which is of larger diameter by means of a second sleeve (47), characterised in that the small fold (42) is connected to the intermediate fold (49) by way of an interposed cylindrical region (41) thus avoiding contact and therefore erosion of the different folds in the position of maximum steering lock of the transmission (40), said region (41) flaring outwardly towards the fold (49) with a radius of curvature (30).

2. A protective bellows according to claim 1 characterised in that the walls of the fold (49) form a right angle to each other, each of said walls which are respectively connected to the fold (48) and to the first cylindrical region (41) being so connected at an angle substantially of the same value.

3. A protective bellows according to claim 1 characterised in that the radius of curvature of the folds is between 0.5 and 5 times the thickness of the bellows.

4. A protective bellows according to claim 1 characterised in that the thickness thereof is constant over at least a part of the length thereof.

5. A protective bellows according to claim 1 characterised in that the diameter of the large fold (48) is of a value of the order of from 0.9 to 1.1 times the total length of the bellows.

6. A protective bellows according to claim 1 characterised in that the diameter of the intermediate fold (49) is of a value of the order of from 0.7 to 1 times the total length of the bellows.

7. A protective bellows according to claim 1 characterised in that the diameter of the small fold (42) is of a value of the order of from 0.6 to 0.8 times the total length of the bellows.

8. A protective bellows according to claim 1 characterised in that the diameter of the first cylindrical region (41) is between 0.4 and 0.6 times the total length of the bellows.

9. A protective bellows according to claim 1 characterised in that the diameter of the second cylindrical region (47) is slightly greater than the diameter of the intermediate fold (49).

10. A protective bellows according to claim 1 characterised in that the length of the second cylindrical region (47) is of the order of 2 to 5 times the mean thickness of the bellows.

11. A protective bellows according to claim 1 characterised in that the plane of symmetry of each fold is disposed at a spacing from the edge of the second cylindrical region (47) which is respectively from 0.1 to 0.3 times the total length of the bellows for the large fold (48), from 0.4 to 0.5 times the same length for the intermediate fold (49) and from 0.7 to 0.8 times the same length for the small fold (42).

FIG.1

FIG.2

FIG.3

FIG.4

FIG.5

FIG.6

FIG.7

FIG.8

## FIG.9

47 48

## FIG.10

47 48

## FIG.11

47 48

50 47 49

## FIG.12

47 51

## FIG.13

47 52

## FIG.14

## FIG.15

## FIG.16